# EUROPÄISCHE PATENTSCHRIFT

(11) **EP 3 270 560 B1**
(45) Veröffentlichungstag und Bekanntmachung des Hinweises auf die Patenterteilung: **25.03.2020**
(21) Anmeldenummer: 16179006.8
(22) Anmeldetag: 12.07.2016
(51) Int. Cl.: H04L 29/06, G05B 19/418

(54) **VERFAHREN ZUM AUFBAU GESICHERTER KOMMUNIKATIONSVERBINDUNGEN ZU EINEM INDUSTRIELLEN AUTOMATISIERUNGSSYSTEM UND FIREWALL-SYSTEM**
METHOD FOR ESTABLISHING SECURE COMMUNICATION LINKS TO AN INDUSTRIAL AUTOMATION SYSTEM AND FIREWALL SYSTEM
PROCEDE D'ETABLISSEMENT DE LIAISONS DE COMMUNICATION SECURISEES AVEC UN SYSTEME D'AUTOMATISATION INDUSTRIEL ET SYSTEME PARE-FEU

(43) Veröffentlichungstag der Anmeldung: 17.01.2018
(73) Patentinhaber: Siemens Aktiengesellschaft, 80333 München (DE)
(72) Erfinder: Glas, Karl, 91074 Herzogenaurach (DE); Gottwald, Sven, 90475 Nürnberg (DE)

(56) Entgegenhaltungen:
- EP-A2- 2 461 538
- US-A1- 2006 053 290
- US-A1- 2008 126 794
- US-A1- 2015 113 264
- Anonymous: "DNP3 - Wikipedia", , 20. Juni 2016 (2016-06-20), XP055320228, Gefunden im Internet: URL:https://en.wikipedia.org/w/index.php?t itle=DNP3&oldid=727297197 [gefunden am 2016-11-16]

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Eine besondere Bedeutung hat dabei eine Bereitstellung von Überwachungs-, Steuerungs- und Regelungsfunktionen in Echtzeit. Störungen von Kommunikationsverbindungen zwischen Automatisierungsgeräten oder Rechnereinheiten eines industriellen Automatisierungssystems können zu einer nachteiligen Wiederholung einer Übermittlung einer Dienstanforderung führen. Insbesondere können nicht oder nicht vollständig übermittelte Nachrichten einen Übergang oder Verbleib eines industriellen Automatisierungssystems in einen sicheren Betriebszustand verhindern und zu einem Ausfall einer industriellen Anlage führen. Eine besondere Problematik resultiert in industriellen Automatisierungssystemen aus einem Meldungsverkehr mit verhältnismäßig vielen, aber relativ kurzen in Echtzeit zu übermittelnden Nachrichten.

Aus US8555373B2 ist eine zwischen einem Quell-Gerät und einem Ziel-Gerät vorgesehene Firewall bekannt, die eine Hardware-Sicherheitskomponente zur Prüfung von aus einem Datenpaket extrahierten Daten gegen eine zulässige Liste umfasst. Zusätzlich führt die Hardware-Sicherheitskomponente eine zustandsbasierte Prüfung hinsichtlich eines Protokolls durch. Die Firewall kann als Security-Proxy ausgestaltet sein und mittels einer Software-Sicherheitskomponente gesicherte Sitzungen zwischen zwei Teilnehmern ermöglichen. Zur Authentifizierung bzw. Entschlüsselung zu prüfender Pakete und Verschlüsselung geprüfter Pakete greift die Software-Sicherheitskomponente auf die Hardware-Sicherheitskomponente zurück.

In US7958549B2 ist eine Firewall mit einem Verschlüsselungsprozessor und einem virtualisierten Server beschrieben. Dabei ist der Verschlüsselungsprozessor dem virtualisierten Server vorgeschaltet und entschlüsselt verschlüsselte Datenpakete, die dann an den virtualisierten Server zur Verarbeitung weitergeleitet werden. In umgekehrter Richtung empfängt der Verschlüsslungsprozessor vom virtualisierten Server verarbeitete Datenpakete, um diese Weiterleitung zu verschlüsseln.

Aus EP2461538A2 ist ein Anwendungsschicht-Sicherheitsproxy bekannt, der Automatisierungssysteme einer Energieversorgungsstation schützt. Der Sicherheitsproxy prüft ein empfangenes Datenpaket auf Anwendungsschicht. In Abhängigkeit davon verwirft der Sicherheitsproxy das Datenpaket, leitet es weiter oder verarbeitet das Datenpaket, anstatt es zu verwerfen. Auf diese Weise kann eine Kommunikationsnetzwerkverbindung entsprechend einer vordefinierten rollenbasierten Zugriffssteuerungsrichtlinie aufrechterhalten werden. Der Sicherheitsproxy berechnet eine Umlaufzeit für jede Antwort auf ein empfangenes Datenpaket und beobachtet eine Bandbreitennutzung anhand übertragener Bytes. Umlaufzeit und Bandbreitennutzung werden verwendet, um abnormalen Kommunikationsverkehr zu erkennen

US2008126794A1 offenbart einen Server und einen Client, die dafür konfiguriert sind, einem Proxy-Zertifikat eines Proxy-Geräts zu vertrauen. Das Proxy-Gerät fängt eine Anforderungsnachricht zum Aufbau einer Sicherheitssitzung ab, die vom Client an den Server gesendet wird. Auf die Anforderungsnachricht initiiert das Proxy-Gerät eine Proxy-Server-Sicherheitssitzung und ruft eine Server-Sicherheitsinformationen vom Server ab. Danach leitet das Proxy-Gerät eine Proxy-Client-Sicherheitssitzung unter Verwendung des Proxy-Zertifikats ein und ruft eine Client-Sicherheitsinformationen vom Client ab. Nach Vorliegen der Client-Sicherheitsinformationen erstellt das Proxy-Gerät unter Verwendung der Client-Sicherheitsinformationen und des Proxy-Zertifikats ein dynamisches Zertifikat und richtet die Proxy-Server-Sicherheitssitzung mit dem dynamischen Zertifikat ein. Abschließend richtet das Proxy-Gerät richtet die Proxy-Client-Sicherheitssitzung ein.

Zum Schutz vertraulicher Informationen oder Daten werden auch in industriellen Kommunikationsnetzen VPN-Kommunikationsverbindungen (Virtual Private Network) verwendet. Bei VPN-Kommunikationsverbindungen erfolgt eine Ende-zu-Ende-Verschlüsselung für zwischen einem Sender und einem Empfänger übermittelte Daten. Dabei kann ein Sender mehrere VPN-Kommunikationsverbindungen gleichzeitig zu mehreren Empfängern aufbauen und nutzen.

Zur Verwaltung einer Vielzahl von VPN-Verbindungen eines Fernwartungssystems, bei dem von einer Vielzahl von Fernwartungsrechnern außerhalb eines industriellen Kommunikationsnetzes auf verschiedene zu steuernde Anlagen oder Anlagenkomponenten innerhalb eines industriellen Kommunikationsnetzes zugegriffen werden kann, sind Rendezvous-Server vorgesehen. Dabei melden sich Benutzer von Fernüberwachungsrechnern beispielsweiser mit ihrer jeweiligen Benutzerkennung am Rendez-vous-Server an und fordern bei diesem einen Zugriff auf eine Anlage, Anlagenkomponente oder ein Feldgerät an. Bei erfolgreicher Anmeldung und Anforderung veranlasst der Rendezvous-Server statisch oder dynamisch einen Aufbau von VPN-Kommunikationsverbindungen zwischen Kommunikationsteilnehmern eines Fernwartungsvorgangs und schaltet diese zusammen. Hierdurch wird eine verschlüsselte Ende-zu-Ende-Kommunikationsverbindung zwischen einem Fernwartungsrechner einerseits und einer Anlage, Anlagenkomponente oder einem Feldgerät andererseits aufgebaut. Eine derartige abhörsichere Ende-zu-Ende-Kommunikationsverbindung verhindert jedoch grundsätzlich eine Kontrolle über Daten oder Informationen, die zwischen den Kommunikationsteilnehmern eines Fernwartungsvorgangs ausgetauscht werden. Insbesondere kann nicht ohne weiteres geprüft werden, ob ausgehend von einem Fernwartungsrechner unzulässige Eingriffe an einer Anlage, Anlagenkomponente oder einem Feldgerät vorgenommen werden oder ob zugelassene Kommunikations- oder Automatisierungssystemprotokolle verwendet werden.

Der vorliegenden Erfindung liegt daher die Aufgabe zugrunde, ein Verfahren zum Aufbau gesicherter Kommunikationsverbindungen zu einem industriellen Kommunikationssystem anzugeben, das eine abhörsichere Datenübermittlung bei gleichzeitiger Überprüfbarkeit übermittelter Daten auf Zulässigkeit ermöglicht, sowie eine geeignete Vorrichtung zur Durchführung des Verfahrens zu schaffen.

Diese Aufgabe wird erfindungsgemäß durch ein Verfahren mit den in Anspruch 1 angegebenen Merkmalen und durch ein Firewall-System mit den in Anspruch 11 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Aufbau gesicherter Kommunikationsverbindungen zu einem industriellen Au-Automatisierungssystem werden Kommunikationsverbindungen von ersten Kommunikationsgeräten außerhalb des industriellen Automatisierungssystems zu dem industriellen Automatisierungssystem zugeordneten zweiten Kommunikationsgeräten über eine Verbindungsverwaltungseinrichtung aufgebaut. Die Verbindungsverwaltungseinrichtung kann insbesondere ein Rendezvous-Server sein. Darüber hinaus können zweite Kommunikationsgeräte beispielsweise in Automatisierungsgeräte integriert oder diesen zugeordnet sein. Bei einer Anforderung eines Verbindungsaufbaus zu einem ausgewählten zweiten Kommunikationsgerät durch einen anfordernden Benutzer eines ersten Kommunikationsgeräts führt die Verbindungsverwaltungseinrichtung anhand einer Zugriffskontrollliste eine Berechtigungsüberprüfung für den anfordernden Benutzer durch. Die Zugriffskontrollliste umfasst vorzugsweise Benutzer-individuelle Angaben zulässiger Kommunikationsverbindungen zwischen jeweils zumindest einem ersten Kommunikationsgerät und zumindest einem zweiten Kommunikationsgerät.

Erfindungsgemäß stellt die Verbindungsverwaltungseinrichtung bei einem positiven Berechtigungsüberprüfungsergebnis Zugriffskontrollinformationen zum Aufbau einer verschlüsselten Kommunikationsverbindung zwischen dem ersten Kommunikationsgerät des anfordernden Benutzers und dem ausgewählten zweiten Kommunikationsgerät für diese Kommunikationsgeräte bereit. Die Verbindungsverwaltungseinrichtung wird durch eine auf einem Firewall-System ablaufende Server-Instanz gebildet. Darüber hinaus werden über eine verschlüsselte Kommunikationsverbindung zwischen dem ersten Kommunikationsgerät des anfordernden Benutzers und dem ausgewählten zweiten Kommunikationsgerät übermittelte Datenpakete für eine auf festgelegten Sicherheitsregeln basierende Überprüfung durch das Firewall-System entschlüsselt. Die festgelegten Sicherheitsregeln können insbesondere Firewall-Regeln bzw. Regeln über eine Zulässigkeit von in Datenpaketen angegebenen Steuerungsbefehlen bzw. Steuerungsparametern für Automatisierungsgeräte umfassen. Erfolgreich auf Basis der festgelegten Sicherheitsregeln überprüfte Datenpakete leitet das Firewall-System verschlüsselt zum ersten Kommunikationsgerät des anfordernden Benutzers bzw. zum ausgewählten zweiten Kommunikationsgerät weiter. Damit kann Datenverkehr zwischen dem ersten Kommunikationsgerät des anfordernden Benutzers und dem ausgewählten zweiten Kommunikationsgerät bidirektional überprüft werden. Vorzugsweise werden zu überprüfende Datenpakete vom ersten Kommunikationsgerät des anfordernden Benutzers an das ausgewählte zweite Kommunikationsgerät durch das Firewall-System entschlüsselt, überprüft und nach erfolgreicher Überprüfung an das zweite Kommunikationsgerät weitergeleitet, während zu überprüfende Datenpakete vom ausgewählten zweiten Kommunikationsgerät an das erste Kommunikationsgerät des anfordernden Benutzers durch das Firewall-System entschlüsselt, überprüft und nach erfolgreicher Überprüfung an das erste Kommunikationsgerät weitergeleitet werden. Das Firewall-System ist vorzugsweise in einem gesicherten Kommunikationsnetz des industriellen Automatisierungssystems angeordnet und verwirft vorteilhafterweise den festgelegten Sicherheitsregeln nicht entsprechende Datenpakete. Alternativ zu einem Verwerfen den festgelegten Sicherheitsregeln nicht entsprechender Datenpakete könnte beispielsweise auch ein Sicherheitsalarm generiert werden.

Erfindungsgemäß sind die über die Verbindungsverwaltungseinrichtung aufgebauten Kommunikationsverbindungen zwischen ersten Kommunikationsgeräten und zweiten Kommunikationsgeräten Virtual-Private-Network-Verbindungen. Außerdem umfasst die Berechtigungsüberprüfung eine Authentisierung des anfordernden Benutzers gegenüber der Verbindungsverwaltungseinrichtung. Darüber hinaus stellt die Verbindungsverwaltungseinrichtung nur nach einer Authentifizierung des anfordernden Benutzers Zugriffskontrollinformationen zur Nutzung einer Virtual-Private-Network-Verbindung zwischen dem ersten Kommunikationsgerät des anfordernden Benutzers und dem ausgewählten zweiten Kommunikationsgerät an den anfordernden Benutzer bereit. Die Zugriffskontrollinformationen umfassen kryptographische Schlüssel bzw. Passwörter für VPN-Sitzungen oder temporär gültige Passwörter. Des Weiteren umfasst die auf den festgelegten Sicherheitsregeln basierende Überprüfung durch das Firewall-System eine Überprüfung von Passwörtern für VPN-Sitzungen oder von temporär gültigen Passwörtern auf Korrektheit, und das Firewall-System verwirft Datenpakete, für deren Übermittlung inkorrekte Passwörter angegeben worden sind.

Die Verbindungsverwaltungseinrichtung baut entsprechend einer vorteilhaften Weiterbildung des erfindungsgemäßen Verfahrens bei einem positiven Berechtigungsüberprüfungsergebnis jeweils eine verschlüsselte Kommunikationsverbindung zum ersten Kommunikationsgerät des anfordernden Benutzers und zum ausgewählten zweiten Kommunikationsgerät auf und verknüpft diese Kommunikationsverbindungen miteinander. Darüber hinaus werden die über die verschlüsselte Kommunikationsverbindung zwischen dem ersten Kommunikationsgerät des anfordernden Benutzers und dem ausgewählten zweiten Kommunikationsgerät übermittelten Datenpakete vorzugsweise durch das Firewall-System entschlüsselt und auf Basis der festgelegten Sicherheitsregeln überprüft; auch erfolgreich auf Basis der festgelegten Sicherheitsregeln überprüfte weiterzuleitende Datenpakete werden durch das Firewall-System verschlüsselt. Entsprechend einer besonders bevorzugten Ausgestaltung der vorliegenden Erfindung erfolgt eine Entschlüsselung bzw. Verschlüsselung von Datenpaketen durch das Firewall-System hardwarebasiert.

Das erfindungsgemäße Firewall-System ist zur Durchführung eines Verfahrens entsprechend vorangehenden Ausführungen vorgesehen und für eine auf festgelegten Sicherheitsregeln basierende Überprüfung von Datenpaketen ausgestaltet und eingerichtet, insbesondere durch Konfiguration. Zusätzlich ist das Firewall-System für einen Ablauf zumindest einer Server-Instanz ausgestaltet und eingerichtet. Durch die Server-Instanz ist eine Verbindungsverwaltungseinrichtung gebildet, die für einen Kommunikationsverbindungsaufbau von ersten Kommunikationsgeräten außerhalb eines industriellen Automatisierungssystems zu dem industriellen Automatisierungssystem zugeordneten zweiten Kommunikationsgeräten ausgestaltet und eingerichtet ist. Die Verbindungsverwaltungseinrichtung ist zusätzlich dafür ausgestaltet und eingerichtet, bei einer Anforderung eines Verbindungsaufbaus zu einem ausgewählten zweiten Kommunikationsgerät durch einen anfordernden Benutzer eines ersten Kommunikationsgeräts anhand einer Zugriffskontrollliste eine Berechtigungsüberprüfung für den anfordernden Benutzer durchzuführen.

Darüber hinaus ist die Verbindungsverwaltungseinrichtung erfindungsgemäß zusätzlich dafür ausgestaltet und eingerichtet, bei einem positiven Berechtigungsüberprüfungsergebnis Zugriffskontrollinformationen zum Aufbau einer verschlüsselten Kommunikationsverbindung zwischen dem ersten Kommunikationsgerät des anfordernden Benutzers und dem ausgewählten zweiten Kommunikationsgerät für diese Kommunikationsgeräte bereitzustellen. Des weiteren ist das Firewall-System zusätzlich dafür ausgestaltet und eingerichtet, über eine verschlüsselte Kommunikationsverbindung zwischen dem ersten Kommunikationsgerät des anfordernden Benutzers bzw. dem ausgewählten zweiten Kommunikationsgerät übermittelte Datenpakete für die auf den festgelegten Sicherheitsregeln basierende Überprüfung zu entschlüsseln. Außerdem ist das Firewall-System zusätzlich dafür ausgestaltet und eingerichtet, erfolgreich auf Basis der festgelegten Sicherheitsregeln überprüfte Datenpakete verschlüsselt zum ersten Kommunikationsgerät des anfordernden Benutzers oder zum ausgewählten zweiten Kommunikationsgerät weiterzuleiten.

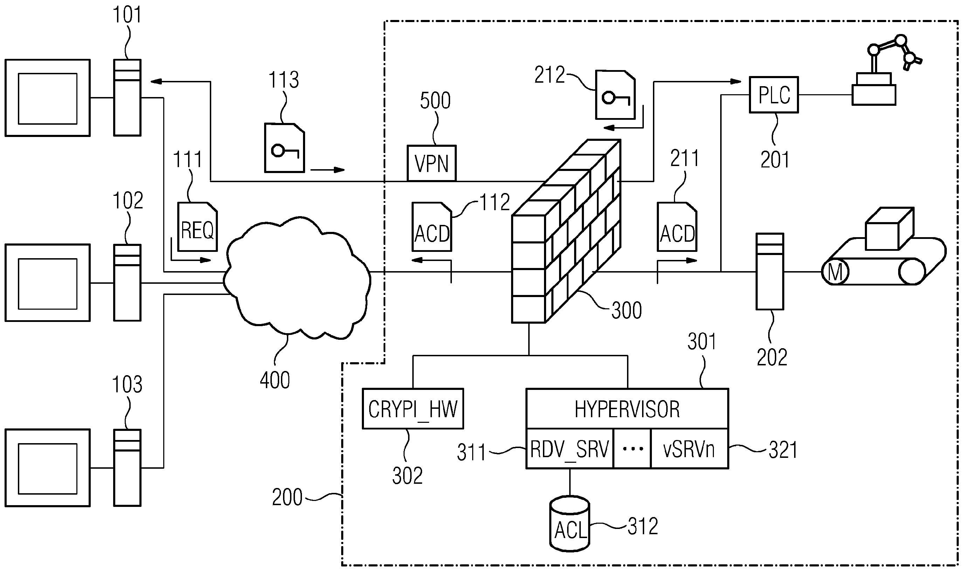

Die vorliegende Erfindung wird nachfolgend an einem Ausführungsbeispiel anhand der Zeichnung näher erläutert. Es zeigt die
- Figur: eine Anordnung mit mehreren Fernwartungsrechnern außerhalb eines industriellen Automatisierungssystems und einem Firewall-System sowie mehreren Automatisierungsgeräten innerhalb des industriellen Automatisierungssystems.

Die in der Figur dargestellte Anordnung umfasst mehrere Fernwartungsrechner 101-103, die über ein Weitverkehrsnetz 400 mit einem Kommunikationsnetz eines industriellen Automatisierungssystems 200 verbunden sind. Die Fernwartungsrechner 101-103 können beispielsweise als PC, Laptop oder Tablet-PC ausgestaltet sein. Das industrielle Automatisierungssystem 200 umfasst zum Schutz vor unzulässigem Nachrichtenverkehr ein Firewall-System 300, das insbesondere im industriellen Automatisierungssystem 200 eingehende Datenpakete auf Basis von festgelegten Sicherheitsregeln überprüft. Diese Sicherheitsregeln umfassen im vorliegenden Ausführungsbeispiel übliche Firewall-Regeln und Regeln über eine Zulässigkeit von in Datenpaketen angegebenen Steuerungsbefehlen bzw. Steuerungsparametern für Automatisierungsgeräte 201-202 des industriellen Automatisierungssystems 200. Somit bietet das Kommunikationsnetz des industriellen Automatisierungssystems 200, in dem das Firewall-System 300 angeordnet ist, sicherheitstechnisch kontrollierte Zugriffsmöglichkeiten auf die Automatisierungsgeräte 201-202 und ist somit gesichert. Das Weitverkehrsnetz 400 kann beispielweise ein Mobilfunknetz oder ein IP-basiertes Kommunikationsnetz sein.

Die Automatisierungsgeräte 201-202 umfassen jeweils integrierte oder zugeordnete Kommunikationsmodule bzw. -geräte und können speicherprogrammierbare oder PC-basierte Steuerungen einer Maschine oder einer technischen Anlage sein, beispielsweise eines Roboters oder einer Fördervorrichtung. Insbesondere umfassen die Automatisierungsgeräte 201-202 jeweils zumindest eine Zentraleinheit und eine Eingabe/Ausgabe-Einheit. Die Eingabe/Ausgabe-Einheiten dienen einem Austausch von Steuerungs- und Messgrößen zwischen dem jeweiligen Automatisierungsgerät 201-202 und einer durch das Automatisierungsgerät 201-202 gesteuerten Maschine oder Vorrichtung. Die Zentraleinheiten der Automatisierungsgerät 201-202 sind insbesondere für eine Ermittlung geeigneter Steuerungsgrößen aus erfassten Messgrößen vorgesehen.

Das Firewall-System 300 ist rechnerbasiert und umfasst im vorliegenden Ausführungsbeispiel einen Hypervisor 301 als Hardware-Abstraktionselement zwischen tatsächlich vorhandener Hardware des Firewall-Systems und auf dem Firewall-System 300 installierbaren, ablauffähigen Betriebssystemen. Ein solcher Hypervisor 301 ermöglicht eine Bereitstellung einer virtuellen Umgebung, die partitionierte Hardwareressourcen, wie Prozessor, Speicher oder Peripheriegeräte umfasst. Anstelle eines Hypervisors 301 können grundsätzlich auch andere bekannte Virtualisierungskonzepte als Hardware-Abstraktionsmittel zur Bereitstellung auf dem Firewall-System 300 ablaufender Server-Instanzen 311, 321 genutzt werden. Im Sinn einer besseren Übersichtlichkeit ist der Hypervisor 301 in der Figur zeichnerisch vom Firewall-System 300 abgesetzt dargestellt.

Nichtsdestotrotz stellt der Hypervisor 301 eine Komponente des Firewall-Systems 300 dar. Dies gilt auch für eine hardwareimplementierte Kryptologiekomponente 302, die in der Figur vom Firewall-System 300 abgesetzt dargestellt, jedoch vom Firewall-System 300 umfasst ist.

Durch eine solche auf dem Firewall-System 300 ablaufende Server-Instanz wird ein Rendezvous-Server 311 als Verbindungsverwaltungseinrichtung gebildet. Dabei ist der Rendezvous-Server 311 dafür vorgesehen und konfiguriert, Kommunikationsverbindungen von ersten Kommunikationsgeräten außerhalb des industriellen Automatisierungssystems 200 zu dem industriellen Automatisierungssystem 200 zugeordneten zweiten Kommunikationsgeräten aufzubauen, zu verwalten und zu steuern. Zu den ersten Kommunikationsgeräten zählen im vorliegenden Ausführungsbeispiel die Fernwartungsrechner 101-103, während zweite Kommunikationsgeräte den Automatisierungsgeräten 201-202 zugeordnete oder von diesen umfasste Kommunikationsgeräte bzw. -module sind.

Bei einer Anforderung 111 eines Verbindungsaufbaus zu einem ausgewählten Automatisierungsgerät 201 durch einen anfordernden Benutzer eines Fernwartungsrechners 101 führt der Rendez-vous-Server 311 anhand einer durch den Rendezvous-Server 311 verwalteten Zugriffskontrollliste 312 eine Berechtigungsüberprüfung für den anfordernden Benutzer in Bezug auf das ausgewählte Automatisierungsgerät 201 durch. Die Zugriffskontrollliste 312 umfasst Benutzer-individuelle Angaben zulässiger Kommunikationsverbindungen zwischen jeweils zumindest einem ersten Kommunikationsgerät und zumindest einem zweiten Kommunikationsgerät.

Verläuft diese Berechtigungsüberprüfung mit einem positiven Ergebnis, stellt der Rendezvous-Server 311 Zugriffskontrollinformationen 112, 211 zum Aufbau einer verschlüsselten Kommunikationsverbindung 500 zwischen dem Fernwartungsrechner 101 des anfordernden Benutzers und dem ausgewählten Automatisierungsgerät 201 für diese Kommunikationsteilnehmer bereit. Im vorliegenden Ausführungsbeispiel sind zwischen Fernwartungsrechnern 101-103 und Automatisierungsgeräten 201-202 aufgebaute verschlüsselte Kommunikationsverbindungen VPN-Verbindungen (Virtual Private Network). Daher umfassen die Zugriffskontrollinformationen 112, 211 vorzugsweise kryptographische Schlüssel bzw. Passwörter für VPN-Sitzungen oder temporär gültige Passwörter. Die Berechtigungsüberprüfung umfasst eine Authentisierung des anfordernden Benutzers gegenüber dem Rendezvous-Server 311, der nur nach einer Authentifizierung des anfordernden Benutzers Zugriffskontrollinformationen 112 zur Nutzung einer VPN-Verbindung zwischen dem Fernwartungsrechner 101 des anfordernden Benutzers und dem ausgewählten Automatisierungsgerät 201 an den anfordernden Benutzer bereitstellt.

Über die VPN-Verbindung 500 zwischen dem Fernwartungsrechner 101 des anfordernden Benutzers und dem ausgewählten Automatisierungsgerät 201 übermittelte Datenpakete 113, 212 werden durch das Firewall-System 300 entschlüsselt und auf Basis der festgelegten Sicherheitsregeln überprüft. Erfolgreich auf Basis der festgelegten Sicherheitsregeln überprüfte Datenpakete werden durch das Firewall-System 300 wieder verschlüsselt und zum Fernwartungsrechner 101 des anfordernden Benutzers bzw. zum ausgewählten Automatisierungsgerät 201 weitergeleitet. Eine Entschlüsselung bzw. Verschlüsselung von zu prüfenden bzw. geprüften Datenpaketen erfolgt durch das Firewall-System 300 hardwarebasiert. Hierzu ist die vom das Firewall-System 300 umfasste hardwareimplementierte Kryptologiekomponente 302 vorgesehen. Den festgelegten Sicherheitsregeln nicht entsprechende Datenpakete werden durch das Firewall-System 300 verworfen.

Im vorliegenden Ausführungsbeispiel umfasst die auf den festgelegten Sicherheitsregeln basierende Überprüfung durch das Firewall-System 300 auch eine Überprüfung von Passwörtern für VPN-Sitzungen oder temporär gültigen Passwörtern auf Korrektheit. Dabei verwirft das Firewall-System 300 Datenpakete verwirft, für deren Übermittlung inkorrekte Passwörter angegeben worden sind.

Grundsätzlich kann die zwischen dem Fernwartungsrechner 101 des anfordernden Benutzers und dem ausgewählten Automatisierungsgerät 201 aufgebaute VPN-Verbindung 500 zwei VPN-Teil-Verbindungen umfassen, die am Rendezvous-Server 311 terminieren. Damit baut der Rendezvous-Server 311 bei einem positiven Berechtigungsüberprüfungsergebnis jeweils eine verschlüsselte Kommunikationsverbindung zum Fernwartungsrechner 101 des anfordernden Benutzers und zum ausgewählten Automatisierungsgerät 201 auf und verknüpft diese Kommunikationsverbindungen miteinander.

## Patentansprüche

1. Verfahren zum Aufbau gesicherter Kommunikationsverbindungen zu einem industriellen Automatisierungssystem, bei dem
- Kommunikationsverbindungen von ersten Kommunikationsgeräten (101-103) außerhalb des industriellen Automatisierungssystems (200) zu dem industriellen Automatisierungssystem zugeordneten zweiten Kommunikationsgeräten (201-202) über eine Verbindungsverwaltungseinrichtung (311) aufgebaut werden,
- die über die Verbindungsverwaltungseinrichtung (311) aufgebauten Kommunikationsverbindungen zwischen ersten Kommunikationsgeräten (101-103) und zweiten Kommunikationsgeräten (201-202) Virtual-Private-Network-Verbindungen sind,
- die Verbindungsverwaltungseinrichtung (311) durch eine auf einem Firewall-System (300) ablaufende Server-Instanz gebildet wird,
- über eine verschlüsselte Kommunikationsverbindung zwischen dem ersten Kommunikationsgerät (101) des anfordernden Benutzers und dem ausgewählten zweiten Kommunikationsgerät (201) übermittelte Datenpakete (113, 212) für eine auf festgelegten Sicherheitsregeln basierende Überprüfung durch das Firewall-System (300) entschlüsselt werden,
- die Verbindungsverwaltungseinrichtung (311) bei einer Anforderung (111) eines Verbindungsaufbaus zu einem ausgewählten zweiten Kommunikationsgerät (201) durch einen anfordernden Benutzer eines ersten Kommunikationsgeräts (101) anhand einer Zugriffskontrollliste (312) eine Berechtigungsüberprüfung für den anfordernden Benutzer durchführt,
- die Berechtigungsüberprüfung eine Authentisierung des anfordernden Benutzers gegenüber der Verbindungsverwaltungseinrichtung (311) umfasst,
- die Verbindungsverwaltungseinrichtung (311) bei einem positiven Berechtigungsüberprüfungsergebnis Zugriffskontrollinformationen (112, 211) zum Aufbau einer verschlüsselten Kommunikationsverbindung (500) zwischen dem ersten Kommunikationsgerät (101) des anfordernden Benutzers und dem ausgewählten zweiten Kommunikationsgerät (201) für diese Kommunikationsgeräte bereitstellt,
- die Verbindungsverwaltungseinrichtung nur nach einer Authentifizierung des anfordernden Benutzers Zugriffskontrollinformationen zur Nutzung einer Virtual-Private-Network-Verbindung zwischen dem ersten Kommunikationsgerät des anfordernden Benutzers und dem ausgewählten zweiten Kommunikationsgerät an den anfordernden Benutzer bereitstellt, wobei die Zugriffskontrollinformationen Passwörter für VPN-Sitzungen oder temporär gültige Passwörter umfassen,
- das Firewall-System (300) erfolgreich auf Basis der festgelegten Sicherheitsregeln überprüfte Datenpakete verschlüsselt zum ersten Kommunikationsgerät (101) des anfordernden Benutzers und/oder zum ausgewählten zweiten Kommunikationsgerät (201) weiterleitet,
- die auf den festgelegten Sicherheitsregeln basierende Überprüfung durch das Firewall-System eine Überprüfung von Passwörtern für VPN-Sitzungen oder temporär gültigen Passwörtern auf Korrektheit umfasst,
- das Firewall-System Datenpakete verwirft, für deren Übermittlung inkorrekte Passwörter angegeben worden sind.

2. Verfahren nach Anspruch 1,
bei dem die Zugriffskontrollliste Benutzer-individuelle Angaben zulässiger Kommunikationsverbindungen zwischen jeweils zumindest einem ersten Kommunikationsgerät und zumindest einem zweiten Kommunikationsgerät umfasst.

3. Verfahren nach einem der Ansprüche 1 oder 3,
bei dem die Verbindungsverwaltungseinrichtung bei einem positiven Berechtigungsüberprüfungsergebnis jeweils eine verschlüsselte Kommunikationsverbindung zum ersten Kommunikationsgerät des anfordernden Benutzers und zum ausgewählten zweiten Kommunikationsgerät aufbaut und diese Kommunikationsverbindungen miteinander verknüpft.

4. Verfahren nach einem der Ansprüche 1 bis 3,
bei dem die über die verschlüsselte Kommunikationsverbindung zwischen dem ersten Kommunikationsgerät des anfordernden Benutzers und dem ausgewählten zweiten Kommunikationsgerät übermittelten Datenpakete durch das Firewall-System entschlüsselt und auf Basis der festgelegten Sicherheitsregeln überprüft werden und bei dem erfolgreich auf Basis der festgelegten Sicherheitsregeln überprüfte weiterzuleitende Datenpakete durch das Firewall-System verschlüsselt werden.

5. Verfahren nach Anspruch 4,
bei dem eine Entschlüsselung und/oder Verschlüsselung von Datenpaketen durch das Firewall-System hardwarebasiert erfolgt.

6. Verfahren nach einem der Ansprüche 1 bis 5,
bei dem die festgelegten Sicherheitsregeln Firewall-Regeln und/oder Regeln über eine Zulässigkeit von in Datenpaketen angegebenen Steuerungsbefehlen und/oder Steuerungsparametern für Automatisierungsgeräte umfassen.

7. Verfahren nach einem der Ansprüche 1 bis 6,
bei dem das Firewall-System den festgelegten Sicherheitsregeln nicht entsprechende Datenpakete verwirft.

8. Verfahren nach einem der Ansprüche 1 bis 7,
bei dem das Firewall-System in einem gesicherten Kommunikationsnetz des industriellen Automatisierungssystems angeordnet ist.

9. Verfahren nach einem der Ansprüche 1 bis 8,
bei dem die Verbindungsverwaltungseinrichtung ein Rendezvous-Server ist.

10. Verfahren nach einem der Ansprüche 1 bis 9,
bei dem zweite Kommunikationsgeräte in Automatisierungsgeräte integriert oder diesen zugeordnet sind.

11. Firewall-System zur Durchführung eines Verfahrens nach einem der Ansprüche 1 bis 10, bei dem
- das Firewall-System für eine auf festgelegten Sicherheitsregeln basierende Überprüfung von Datenpaketen (113, 212) ausgestaltet und eingerichtet ist,
- das Firewall-System zusätzlich für einen Ablauf zumindest einer Server-Instanz ausgestaltet und eingerichtet ist,
- durch die Server-Instanz eine Verbindungsverwaltungseinrichtung (311) gebildet ist, die für einen Kommunikationsverbindungsaufbau von ersten Kommunikationsgeräten (101-103) außerhalb eines industriellen Automatisierungssystems zu dem industriellen Automatisierungssystem zugeordneten zweiten Kommunikationsgeräten (201-202) ausgestaltet und eingerichtet ist,
- die über die Verbindungsverwaltungseinrichtung (311) aufgebauten Kommunikationsverbindungen zwischen ersten Kommunikationsgeräten (101-103) und zweiten Kommunikationsgeräten (201-202) Virtual-Private-Network-Verbindungen sind,
- die Verbindungsverwaltungseinrichtung (311) zusätzlich dafür ausgestaltet und eingerichtet ist, bei einer Anforderung (111) eines Verbindungsaufbaus zu einem ausgewählten zweiten Kommunikationsgerät (201) durch einen anfordernden Benutzer eines ersten Kommunikationsgeräts (101) anhand einer Zugriffskontrollliste (312) eine Berechtigungsüberprüfung für den anfordernden Benutzer durchzuführen,
- die Berechtigungsüberprüfung eine Authentisierung des anfordernden Benutzers gegenüber der Verbindungsverwaltungseinrichtung (311) umfasst,
- die Verbindungsverwaltungseinrichtung (311) zusätzlich dafür ausgestaltet und eingerichtet ist, bei einem positiven Berechtigungsüberprüfungsergebnis Zugriffskontrollinformationen (112, 211) zum Aufbau einer verschlüsselten Kommunikationsverbindung (500) zwischen dem ersten Kommunikationsgerät (101) des anfordernden Benutzers und dem ausgewählten zweiten Kommunikationsgerät (201) für diese Kommunikationsgeräte bereitzustellen,
- die Verbindungsverwaltungseinrichtung zusätzlich dafür ausgestaltet und eingerichtet ist, nur nach einer Authentifizierung des anfordernden Benutzers Zugriffskontrollinformationen zur Nutzung einer Virtual-Private-Network-Verbindung zwischen dem ersten Kommunikationsgerät des anfordernden Benutzers und dem ausgewählten zweiten Kommunikationsgerät an den anfordernden Benutzer bereitzustellen, wobei die Zugriffskontrollinformationen Passwörter für VPN-Sitzungen oder temporär gültige Passwörter umfassen,
- das Firewall-System zusätzlich dafür ausgestaltet und eingerichtet ist, über eine verschlüsselte Kommunikationsverbindung (500) zwischen dem ersten Kommunikationsgerät (101) des anfordernden Benutzers und dem ausgewählten zweiten Kommunikationsgerät (201) übermittelte Datenpakete (113, 212) für die auf den festgelegten Sicherheitsregeln basierende Überprüfung zu entschlüsseln,
- das Firewall-System zusätzlich dafür ausgestaltet und eingerichtet ist, erfolgreich auf Basis der festgelegten Sicherheitsregeln überprüfte Datenpakete verschlüsselt zum ersten Kommunikationsgerät (101) des anfordernden Benutzers oder zum ausgewählten zweiten Kommunikationsgerät (201) weiterzuleiten,
- die auf den festgelegten Sicherheitsregeln basierende Überprüfung durch das Firewall-System eine Überprüfung von Passwörtern für VPN-Sitzungen oder temporär gültigen Passwörtern auf Korrektheit umfasst,
- das Firewall-System dafür ausgestaltet und eingerichtet ist, Datenpakete zu verwerfen, für deren Übermittlung inkorrekte Passwörter angegeben worden sind.

## Claims

1. Method for establishing secured communications connections to an industrial automation system, in which
- communications connections are set up from first communications devices (101 - 103) outside of the industrial automation system (200) to second communications devices (201 - 202) assigned to the industrial automation system via a connection management device (311),
- the communications connections established via the connection management device (311) between first communications devices (101 - 103) and second communications devices (201 - 202) are Virtual Private Network connections,
- the connection management device (311) is formed by a server instance running on a firewall system (300),
- data packets (113, 212) transmitted via an encrypted communications connection between the first communications device (101) of the requesting user and the selected second communications device (201) are decrypted for a verification by the firewall system (300) based on defined security rules,
- in the event of a request (111) to set up a connection to a selected second communications device (201) by a requesting user of a first communications device (101), the connection management device (311) performs an authorization verification for the requesting user based on an access control list (312),
- the authorization verification comprises an authentication of the requesting user against the connection management device (311),
- in the event of a positive authorization verification outcome, the connection management device (311) provides access control information (112, 211) for establishing an encrypted communications connection (500) between the first communications device (101) of the requesting user and the selected second communications device (201) for these communications devices,
- the connection management device provides access control information to the requesting user regarding the use of a Virtual Private Network connection between the first communications device of the requesting user and the selected second communications device only after an authentication of the requesting user, wherein the access control information items comprise passwords for VPN sessions or temporarily valid passwords,
- the firewall system (300) forwards data packets successfully verified on the basis of the defined security rules in encrypted form to the first communications device (101) of the requesting user and/or to the selected second communications device (201),
- the verification by the firewall system based on the defined security rules comprises a verification of the correctness of passwords for VPN sessions or temporarily valid passwords,
- the firewall system rejects data packets, for the transmission of which incorrect passwords have been specified.

2. Method according to Claim 1,
in which the access control list comprises user-specific information about permissible communication connections in each case between at least one first communications device and at least one second communications device.

3. Method according to any one of Claims 1 and 3,
in which in the case of a positive authorization verification outcome, the connection management device provides an encrypted communications connection to the first communications device of the requesting user and to the selected second communications device and links these communications connections to each other.

4. Method according to any one of Claims 1 to 3,
in which the data packets transmitted via the encrypted communications connection between the first communications device of the requesting user and the selected second communications device are decrypted by the firewall system and are verified on the basis of the defined security rules, and in which data packets to be forwarded that are successfully verified on the basis of the defined security rules are encrypted by the firewall system.

5. Method according to Claim 4,
in which a decryption and/or encryption of data packets is carried out by the firewall system in hardware.

6. Method according to any one of Claims 1 to 5,
in which the defined security rules comprise firewall rules and/or rules relating to the admissibility of control commands and/or control parameters for automation devices specified in data packets.

7. Method according to any one of Claims 1 to 6,
in which the firewall system rejects data packets that do not comply with the defined security rules.

8. Method according to any one of Claims 1 to 7,
in which the firewall system is arranged in a secured communication network of the industrial automation system.

9. Method according to any one of Claims 1 to 8,
in which the connection management device is a rendezvous server.

10. Method according to any one of Claims 1 to 9,
in which second communications devices are integrated into automation devices or assigned to these.

11. Firewall system for carrying out a method according to any one of Claims 1 to 10, in which
- the firewall system is designed and configured for a verification of data packets (113, 212) based on specified security rules,
- the firewall system is additionally designed and configured for processing at least one server instance,
- the server instance forms a connection management device (311), which is designed and configured for establishing a communications connection from first communications devices (101 - 103) outside of an industrial automation system to second communications devices (201 - 202) assigned to the industrial automation system,
- the communications connections established via the connection management device (311) between first communications devices (101 - 103) and second communications devices (201 - 202) are Virtual Private Network connections,
- the connection management device (311) is additionally designed and configured, in the event of a request (111) to set up a connection to a selected second communications device (201) by a requesting user of a first communications device (101), to perform an authorization verification for the requesting user based on an access control list (312),
- the authorization verification comprises an authentication of the requesting user against the connection management device (311),
- the connection management device (311) is additionally designed and configured, in the event of a positive authorization verification outcome, to provide access control information (112, 211) for establishing an encrypted communications connection (500) between the first communications device (101) of the requesting user and the selected second communications device (201) for these communications devices,
- the connection management device is additionally designed and configured to provide access control information to the requesting user regarding the use of a Virtual Private Network connection between the first communications device of the requesting user and the selected second communications device only after an authentication of the requesting user, wherein the access control information items comprise passwords for VPN sessions or temporarily valid passwords,
- the firewall system is additionally designed and configured to decrypt data packets (113, 212) transmitted via an encrypted communications connection (500) between the first communications device (101) of the requesting user and the selected second communications device (201) for the verification based on defined security rules,
- the firewall system is additionally designed and configured to forward data packets successfully verified on the basis of the defined security rules in encrypted form to the first communications device (101) of the requesting user or to the selected second communications device (201),
- the verification by the firewall system based on the defined security rules comprises a verification of the correctness of passwords for VPN sessions or temporarily valid passwords,
- the firewall system is additionally designed and configured to reject data packets, for the transmission of which incorrect passwords have been specified.

## Revendications

1. Procédé d'établissement de liaisons de communication sécurisées avec un système d'automatisation industriel, dans lequel
- on établit, par un dispositif (311) de gestion de liaisons, des liaisons de communication de premiers appareils (101 à 103) de communication, en dehors du système (200) d'automatisation industriel, avec des deuxièmes appareils (201-202) de communication affectés au système d'automatisation industriel,
- les liaisons de communication entre des premiers appareils (101 à 103) de communication et des deuxièmes appareils (201-202) de communication établies par le dispositif (311) de gestion de liaison sont des liaisons de réseau privé virtuel,
- on forme le dispositif (311) de gestion de liaisons par une instance de serveur se déroulant sur un système (300) de firewall,
- on déchiffre par le système de firewall, pour un contrôle, reposant sur des règles de sécurité fixées, des paquets (113, 212) de données transmises par une liaison de communication chiffrée entre le premier appareil (101) de communication de l'utilisateur demandeur et le deuxième appareil (201) de communication sélectionné,
- le dispositif (311) de gestion de liaisons effectue, lorsqu'un établissement de liaison avec un deuxième appareil (201) de communication sélectionné est demandé par un utilisateur demandeur d'un premier appareil (101) de communication, au moyen d'une liste (312) de commande d'accès, un contrôle d'autorisation de l'utilisateur demandeur,
- le contrôle d'autorisation comprend une authentification de l'utilisateur demandeur par le dispositif (311) de gestion de liaisons,
- le dispositif (311) de gestion de liaisons procure, si un résultat du contrôle d'autorisation est positif, des informations (112, 211) de commande d'accès pour l'établissement d'une liaison (500) de communication chiffrée entre le premier appareil (101) de communication de l'utilisateur demandeur et le deuxième appareil (201) de communication sélectionné pour ces appareils de communication,
- le dispositif de gestion de liaisons procure à l'utilisateur demandeur, seulement après une authentification de l'utilisateur demandeur, des informations de commande d'accès pour l'utilisation d'une liaison de réseau privé virtuel entre le premier appareil de communication de l'utilisateur demandeur et le deuxième appareil de communication sélectionné, les informations de commande d'accès comprenant des mots de passe pour des sessions VPN ou des mots de passe valables temporairement,
- le système (300) de firewall achemine, chiffrés, des paquets de données, contrôlés avec succès sur la base des règles de sécurité fixées, vers le premier appareil (101) de communication de l'utilisateur demandeur et/ou vers le deuxième appareil (201) de communication sélectionné,
- le contrôle, par le système de firewall, reposant sur les règles de sécurité fixées, comprend un contrôle que des mots de passe pour des sessions VPN ou des mots de passe valables temporairement sont corrects,
- le système de firewall rejette des paquets de données, pour la transmission desquels des mots de passe incorrects sont donnés.

2. Procédé suivant la revendication 1,
dans lequel les indications individuelles d'utilisateur de la liste de commande d'accès comprennent des liaisons de communication autorisées entre, respectivement, au moins un premier appareil de communication et au moins un deuxième appareil de communication.

3. Procédé suivant l'une des revendications 1 ou 2,
dans lequel le dispositif de gestion de liaisons établit, si le résultat du contrôle d'autorisation est positif, respectivement, une liaison de communication chiffrée vers le premier appareil de communication de l'utilisateur demandeur et vers le deuxième appareil de communication sélectionné et rattache entre elles ces liaisons de communication.

4. Procédé suivant l'une des revendications 1 à 3,
dans lequel on déchiffre, par le système de firewall les paquets de données transmis par la liaison de communication chiffrée entre le premier appareil de communication de l'utilisateur demandeur et le deuxième appareil de communication sélectionné et on les contrôle sur la base des règles de sécurité fixées, et dans lequel on chiffre par le système de firewall des paquets de données à acheminer, qui ont été contrôlés avec succès sur la base des règles de sécurité fixées.

5. Procédé suivant la revendication 4,
dans lequel un déchiffrement et/ou un chiffrement de paquets de données s'effectue en matériel par le système de firewall.

6. Procédé suivant l'une des revendications 1 à 5,
dans lequel les règles de sécurité fixées comprennent des règles de firewall et/ou des règles sur l'admissibilité d'instructions de commande données dans les paquets de données et/ou de paramètres de commande des appareil d'automatisation.

7. Procédé suivant l'une des revendications 1 à 6,
dans lequel le système de firewall rejette des paquets de données ne correspondant pas aux règles de sécurité fixées.

8. Procédé suivant l'une des revendications 1 à 7,
dans lequel le système de firewall est monté dans un réseau de communication sécurisé du système d'automatisation industriel.

9. Procédé suivant l'une des revendications 1 à 8,
dans lequel le dispositif de gestion de liaison est un serveur rendez-vous.

10. Procédé suivant l'une des revendications 1 à 9,
dans lequel des deuxièmes appareils de communication sont intégrés dans des appareils d'automatisation ou leur sont associés.

11. Système de firewall pour effectuer un procédé suivant l'une des revendications 1 à 10, dans lequel
- le système de firewall est conformé et conçu pour un contrôle de paquets (113, 212) de données reposant sur des règles de sécurité fixées,
- le système de firewall est conformé et conçu, en outre, pour un déroulement d'au moins une instance de serveur,
- par l'instance de serveur est formé un dispositif (311) de gestion de liaisons, qui est conformé et conçu pour un établissement de liaisons de communication de premiers appareils (101 à 103) de communication en dehors d'un système d'automatisation industriel avec des deuxièmes appareils (201-202) de communication affectés au système d'automatisation industriel,
- les liaisons de communication entre des premiers appareils (101 à 103) de communication et des deuxièmes appareils (201-202) de communication, établies par le dispositif (311) de gestion de liaison, sont des liaisons de réseau privé virtuel,
- le dispositif (311) de gestion de liaisons est conformé et conçu, en outre, pour, lors d'une demande (111) d'établir une liaison avec un deuxième appareil (201) de communication sélectionné par un utilisateur demandeur d'un premier appareil (101) de communication, effectuer, à l'aide d'une liste (312) de commande d'accès, un contrôle d'autorisation de l'utilisateur demandeur,
- le contrôle d'autorisation comprend une authentification de l'utilisateur demandeur par le dispositif (311) de gestion de liaisons,
- le dispositif (311) de gestion de liaisons est conformé et conçu, en outre, pour, si le résultat du contrôle d'autorisation est positif, procurer des informations (112, 211) de commande d'accès pour l'établissement d'une liaison (500) de communication chiffrée entre le premier appareil (101) de communication de l'utilisateur demandeur et le deuxième appareil (201) de communication sélectionné pour ces appareils de communication,
- le dispositif de gestion de liaisons est conformé et conçu, en outre, pour procurer à l'utilisateur demandeur, seulement après une authentification de l'utilisateur demandeur, des informations de commande d'accès pour l'utilisation d'une liaison de réseau privé virtuel entre le premier appareil de communication de l'utilisateur demandeur et le deuxième appareil de communication sélectionné, les informations de commande d'accès comprenant des mots de passe pour des sessions VPN ou des mots de passe valables temporairement,
- le système de firewall est conformé et conçu, en outre, pour déchiffrer, pour le contrôle, reposant sur les règles de sécurité fixées, des paquets (113, 212) de données transmis par une liaison (500) de communication chiffrée entre le premier appareil (101) de communication de l'utilisateur demandeur et le deuxième appareil (201) de communication chiffrée,
- le système de firewall est conformé et conçu, en outre, pour acheminer vers le premier appareil (101) de communication de l'utilisateur demandeur ou vers le deuxième appareil (201) de communication sélectionné, des paquets de données contrôlés avec succès sur la base des règles de sécurité fixées,
- le contrôle par le système de firewall, reposant sur les règles de sécurité fixées, comprend un contrôle que des mots de passe pour des sessions VPN ou des mots de passe valables temporairement sont corrects,
- le système de firewall est conformé et conçu pour rejeter des paquets de données pour la transmission desquels des mots de passe incorrects ont été donnés.
